# FASCICULE DE BREVET EUROPEEN

(11) **EP 3 613 092 B1**
(45) Date de publication et mention de la délivrance du brevet: **01.06.2022**
(21) Numéro de dépôt: 18718621.8
(22) Date de dépôt: 06.04.2018
(51) Int. Cl.: H01M 50/308, H01M 10/12

(54) **SUPPORT DE BOUCHONS DE BATTERIE DE VÉHICULE ET BAC DE BATTERIE COMPRENANT UN TEL SUPPORT**
TRÄGER FÜR STOPFEN EINER FAHRZEUGBATTERIE UND BATTERIEFACH MIT EINEM DERARTIGEN TRÄGER
SUPPORT FOR VEHICLE BATTERY CAPS AND BATTERY TRAY COMPRISING SUCH A SUPPORT

(30) Priorité: 19.04.2017 FR 1753390
(43) Date de publication de la demande: 26.02.2020
(73) Titulaire: Renault s.a.s, 92100 Boulogne Billancourt (FR)
(72) Inventeur: BARROSO, Inaki, 78280 Guyancourt (FR); GUIGNARD, Fabrice, 78280 Guyancourt (FR)
(74) Mandataire: Renault Group
(86) Numéro de dépôt international: PCT/FR2018/050862
(87) Numéro de publication internationale: WO 2018/193178

(56) Documents cités:
- EP-A2- 1 447 865
- WO-A1-2016/166435
- JP-A- S5 975 559
- JP-A- 2000 164 189
- US-A1- 2008 020 269

## Description

La présente invention concerne un kit de bouchons de batterie formé par un support comprenant plusieurs bouchons de batterie solidarisés entre eux.

Plus particulièrement, ce support permet de fixer les bouchons ensemble dans un véhicule, notamment à côté de la batterie ou sur son bac.

Les batteries, notamment les batteries au plomb 12V, sont généralement étanches, à l'exception d'un ou plusieurs trous de dégazage. Les couvercles sur le dessus de la batterie sont scellés, notamment par thermo-soudage et les bouchons étanches sont agencés de manière à ne pas pouvoir être dévissés.

En partie haute, la batterie comporte un circuit de dégazage, qui permet l'évacuation vers l'extérieur de la batterie des gaz produits lors de la charge et de la décharge de la batterie. Le conduit d'évacuation débouche à l'extérieur de la batterie par un trou de dégazage, situé en haut de la batterie.

JP S59 75559 A divulgue un support de bouchons de batterie de véhicule comprenant plusieurs bouchons de batterie et un organe de solidarisation reliant entre eux les bouchons de batterie dudit support.

Ce trou de dégazage est notamment situé soit du côté positif de la batterie, soit du côté négatif de la batterie. Dans certains cas, on peut trouver des batteries avec deux trous de dégazage, un du côté positif et l'autre du côté négatif.

Dans un véhicule automobile, afin d'éviter tout risque lié à la sortie du gaz de la batterie ou de l'électrolyte acide par ce trou de dégazage, un tuyau, appelé tuyau de dégazage, est connecté au trou de dégazage de la batterie afin de diriger ces gaz ou ces liquides dans des zones non à risque.

Une des difficultés concerne le montage dans un véhicule, notamment en après-vente, d'une telle batterie comportant deux trous de dégazage. Sur l'un des côtés, le tuyau est branché sur le trou de dégazage correspondant mais sur l'autre, le trou est laissé ouvert et dans ce cas des gaz ou de l'électrolyte acide peuvent sortir de la batterie dans des zones à risque, où des pièces du véhicule pourront être endommagées par l'électrolyte acide ou les gaz émis.

Le problème technique que vise à résoudre l'invention est donc de trouver une solution technique permettant à l'utilisateur du véhicule de prévenir directement ce risque, notamment lorsqu'il remplace sa batterie.

A cet effet, un premier objet de l'invention est un support de bouchons de batterie de véhicule comprenant plusieurs bouchons de batterie et un organe de solidarisation reliant entre eux les bouchons de batterie dudit support, chaque bouchon de batterie étant individuellement détachable dudit organe de solidarisation , ledit support formant un kit et lesdits bouchons étant des bouchons destinés à boucher un trou de dégazage.

Ainsi, ce support forme un kit que l'on peut embarquer dans le véhicule, par exemple en le fixant à proximité de l'emplacement de montage de la batterie dans le véhicule.

Lors du remplacement de la batterie l'utilisateur pourra détacher l'un des bouchons du kit et boucher le second trou.

Par ailleurs, en cas de perte ou de dégradation d'un bouchon monté précédemment, il pourra en prendre un autre facilement tous les bouchons étant localisés au même endroit. Par ailleurs, grâce à l'organe de jonction on évite de perdre ces bouchons.

Ainsi ce support offre une solution embarquée au véhicule permettant de prévenir les risques d'endommagement par l'électrolyte acide ou les gaz émis, y compris suite à plusieurs montage de batterie.

Le support de bouchons selon l'invention peut optionnellement présenter une ou plusieurs des caractéristiques suivantes :
- les bouchons et l'organe de solidarisation sont venus de matière en une seule pièce ; cela diminue davantage le risque de perdre l'un des bouchons ; par ailleurs la réalisation du kit formé par le support est simplifiée ;
- chaque bouchon est relié à l'organe de solidarisation via une portion sécable, notamment manuellement ; il est ainsi simple pour l'utilisateur de choisir un bouchon et de le détacher, notamment au moment du montage de la batterie ;
- au moins deux des bouchons sont de tailles et/ou de formes différentes ; cela permet une adaptation à des batteries présentant des trous de dégazage de taille différente et/ou dont l'agencement requiert des formes différentes ;
- l'organe de solidarisation comprend une portion de fixation, destinée à fixer le support de bouchons ; ainsi il n'est pas nécessaire d'attacher ou de fixer le kit par un élément externe à celui-ci ;
- la portion de fixation a une forme agencée de manière à ce que cette portion de fixation soit apte à être insérée en force autour ou dans un élément saillant d'un bac de batterie ; cela permet une fixation simple par enfoncement ;
- l'organe de solidarisation comprend un cadre à l'intérieur duquel sont agencés lesdits bouchons, ces bouchons étant reliés au cadre par des portions de jonction ; le cadre permet une bonne solidarisation et forme également un moyen de fixation, que l'on peut glisser en force, par exemple dans un logement dont les parois présentent une forme complémentaire de ce cadre ;
- le cadre comprend un côté formé par un bloc de rigidification du cadre, les autres côtés étant formés par des tiges plus fines et plus souple que le bloc ; ce bloc permet ainsi de conférer une certaine rigidité au cadre ce qui facilite sa préhension, notamment pour fixer ou enlever le support, lorsque ce dernier est fixé par enfoncement ;
- l'organe de solidarisation comprend une pince élastiquement déformable ; c'est un moyen simple de fixation par enfoncement, permettant de fixer le support sur un bord libre d'une paroi ou d'un muret, par exemple sur le sommet du bord d'un bac de batterie ;
- l'organe de solidarisation comprend un panneau latéral comprenant une face supérieure et une face inférieure ; ce panneau peut ainsi être agencé de manière à recouvrir, voire à fermer, un puit de fixation d'un bac de batterie ;
- la face inférieure du panneau latéral comprend une nervure circulaire ; cela permet d'obturer plus efficacement un puit de fixation de forme complémentaire ;
- la face supérieure du panneau latéral comprend un marquage, notamment un marquage moulé en surface ; ainsi, il n'est plus nécessaire d'avoir des supports d'informations séparés ; par exemple, ce marquage peut correspondre à une notice, notamment de montage des bouchons et/ou de la batterie, permettant ainsi de ne pas perdre cette notice.

Un autre objet de l'invention est un ensemble d'accueil de batterie comprenant un bac de batterie et un support de bouchons selon l'invention, ce support étant fixé au bac de batterie.

On a ainsi un bac de batterie permettant à l'utilisateur de placer la batterie en ayant les bouchons pour boucher le deuxième trou de dégazage à portée de main.

L'ensemble d'accueil selon l'invention peut optionnellement présenter une ou plusieurs des caractéristiques suivantes :
- le bac comprend un fond avec une face supérieure, dite face d'accueil, destinée à être en vis-à-vis d'une batterie destinée à se loger dans le bac, la face d'accueil comprenant un muret de protection du support de bouchons s'étendant en hauteur depuis la face d'accueil vers le haut et se refermant sur lui-même de manière à former un logement à l'intérieur duquel est logé le support de bouchons ; le support de bouchon peut ainsi être placé de manière accessible dans le bac de batterie, tout en étant protégé par le muret ; il n'y a de plus pas de contrainte d'encombrement autour de la batterie dans le compartiment du véhicule l'accueillant pour fixer le support de bouchon ;
- la face d'accueil comprend un orifice d'évacuation de liquide et une rigole de collecte circonscrite autour du muret de protection du support, cette rigole de collecte étant reliée à l'orifice d'évacuation par une rigole d'évacuation ; cela permet d'évacuer de l'eau venant dans le bac de batterie, notamment lors d'un nettoyage, ou d'un électrolyte en cas de fuite, qui viendraient à proximité du support de bouchon ;
- le bac comprend un fond avec une face supérieure, dite face d'accueil, destinée à être en vis-à-vis d'une batterie destinée à se loger dans le bac, le fond comprenant des trous traversants destinés à être traversés par des organes de fixation du bac à un véhicule, lesdits trous traversants étant entourés par un muret de protection refermé sur lui-même, formant ainsi un puit de fixation, ledit puit de fixation étant saillant depuis la face d'accueil, le support comprenant un panneau latéral comprenant une face supérieure et une face inférieure, cette face inférieure recouvrant l'un des puits de fixation ; ainsi le support de bouchons a également une fonction de protection d'un organe de fixation que le puit de fixation est destiné à recevoir ;
- l'ensemble d'accueil comprend une batterie logée dans le bac.

Un autre objet de l'invention, est un véhicule comprenant :
- un support de bouchons selon l'invention, et/ou
- un ensemble d'accueil selon l'invention.

Dans la présente demande, les termes « haut », « supérieur » et « inférieur », « dessus », « dessous » sont appliqués selon l'orientation du support du bouchon ou de l'ensemble d'accueil tels qu'ils sont destinés à être montés sur le véhicule.

D'autres caractéristiques et avantages de l'invention apparaîtront à la lecture de la description détaillée des exemples non limitatifs qui suivent, pour la compréhension de laquelle on se reportera aux dessins annexés, parmi lesquels :
- la figure 1 est une vue de dessus en légère perspective d'un exemple de support de bouchons selon l'invention ;
- la figure 2 est une vue en perspective de dessous du support de bouchons de la figure 1 ;
- la figure 3 est une vue en perspective de dessus d'une batterie montée dans un bac de batterie d'un exemple d'ensemble d'accueil de batterie selon l'invention ;
- la figure 4 correspond à la figure 3 mais sans la batterie ;
- la figure 5 représente en vue de dessus une variante de l'ensemble d'accueil de la figure 4, avec une variante du premier exemple de support de bouchons selon l'invention ;
- la figure 6 représente une vue en coupe en perspective d'une partie de la figure 5 selon AA' ;
- la figure 7 est une vue en perspective vue de dessus d'un deuxième exemple de support de bouchons selon l'invention;
- la figure 8 est une vue de dessus du support de bouchons de la figure 7 ;
- la figure 9 est une vue en perspective de dessus d'une batterie montée dans un bac de batterie avec le support de bouchons des figures 7 et 8 monté sur le bac de batterie.

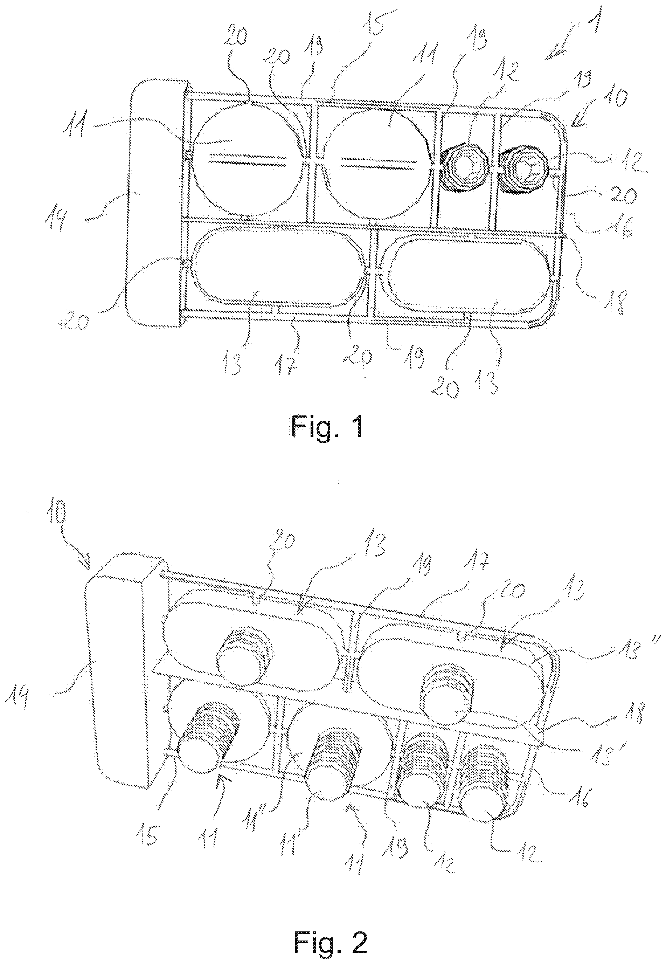

Les figures 1 et 2 illustrent un support de bouchons 1 de batterie de véhicule selon un premier exemple de réalisation de l'invention.

Ce support de bouchons 1 comprend plusieurs bouchons de batterie, ici, six bouchons 11 à 13.

Dans cet exemple, il y a trois types de bouchons 11, 12, 13 et deux bouchons de même type.

Les bouchons 11, 12, 13 sont tous reliés ensemble par un organe de solidarisation 10. Le support de bouchons 1 forme ainsi un kit permettant de maintenir ensemble tous les bouchons.

Chaque bouchon de batterie 11, 12, 13 est individuellement détachable de l'organe de solidarisation 10. Ainsi, lorsque l'on monte une batterie de véhicule, on peut choisir le bouchon le plus approprié pour boucher le deuxième trou de dégazage, le premier trou de dégazage étant relié à un tuyau.

Comme dans l'exemple illustré, l'organe de solidarisation 10 et les bouchons 11, 12, 13 peuvent être venus de matière en une seule pièce.

Dans l'exemple illustré, l'organe de solidarisation 10 comprend un cadre, ici rectangulaire.

Ici, le cadre comprend un premier côté formé par un bloc 14, les autres côtés 15, 16, 17 étant formés par des tiges plus fines et plus souple que le bloc 14. Ce bloc 14 forme ainsi un bloc de rigidification permettant de renforcer la rigidité au cadre. Ce bloc 14 forme également un moyen de préhension du support 1.

Les bouchons 11, 12, 13 sont agencés à l'intérieur du cadre et lui sont reliés par des portions de jonction 18, 19, 20.

Ces portions de jonction comprennent ici :
- une traverse principale 18 qui relie le bloc 14 au côté opposé 16;
- des traverses secondaires 19 qui relient chacune la traverse principale 18 directement à l'un des côtés 17, 15 du cadre s'étendant dans la même direction que la traverse principale 18.

Ainsi le cadre et les traverses 18, 19 délimitent des emplacements à l'intérieur de chacun desquels est placé l'un des bouchons 11, 12, 13.

Les portions de jonction comprennent également des portions sécables 20, qui relient les bouchons 11, 12, 13 au cadre et donc à l'organe de solidarisation 10. Cette liaison se fait soit directement à l'un des côté 14, 15, 16, 17 du cadre, soit indirectement par l'intermédiaire de l'une des traverses 18, 19.

Les portions sécables 20 sont directement reliées au bouchon correspondant 11, 12, 13. Elles peuvent être rompues par une lame ou manuellement, par exemple par une torsion exercée sur l'un des bouchons. On peut ainsi aisément détacher les bouchons 11, 12, 13.

Ici, les bouchons sont de trois types différents. Les premiers bouchons 11 comprennent une tige 11' destinée à être enfoncée dans un trou de dégazage pour le fermer. Ils comprennent chacun une tête circulaire 11'' pour bloquer l'enfoncement. C'est cette tête circulaire 11'' qui est directement reliée aux portions sécables 20, la reliant à au moins un côté 15, 14 du cadre et aux traverses 18, 19. Ces premiers bouchons 11 peuvent être choisis pour des batteries avec un trou de dégazage de diamètre complémentaire à celui de la tige 11', et avec une zone d'accueil sur la batterie correspondant à la périphérie de la tête circulaire 11''.

Cependant pour une batterie avec une zone d'accueil différente, par exemple allongée transversalement, on peut choisir les troisièmes bouchons 13 avec une tige 13' identique à celle 11' des premiers bouchons 11, mais dont la tête 13'' est allongée transversalement.

En cas de zone d'accueil ne correspondant à aucune des têtes 11'', 13'' de bouchon, il est possible de choisir les deuxièmes bouchons 12, qui sont formés par une tige 12 identique à celle des premiers et troisièmes bouchons 13 mais qui sont dépourvus de tête.

Naturellement, ces exemples ne sont pas limitatifs. Un support selon l'invention peut aussi comprendre des bouchons avec des tiges de diamètres différents. Le nombre de bouchons n'est pas non plus limitatif.

Le cadre forme ici une portion de fixation de l'organe de solidarisation 10.

Celui-ci peut par exemple être accroché dans le compartiment moteur à proximité de la batterie.

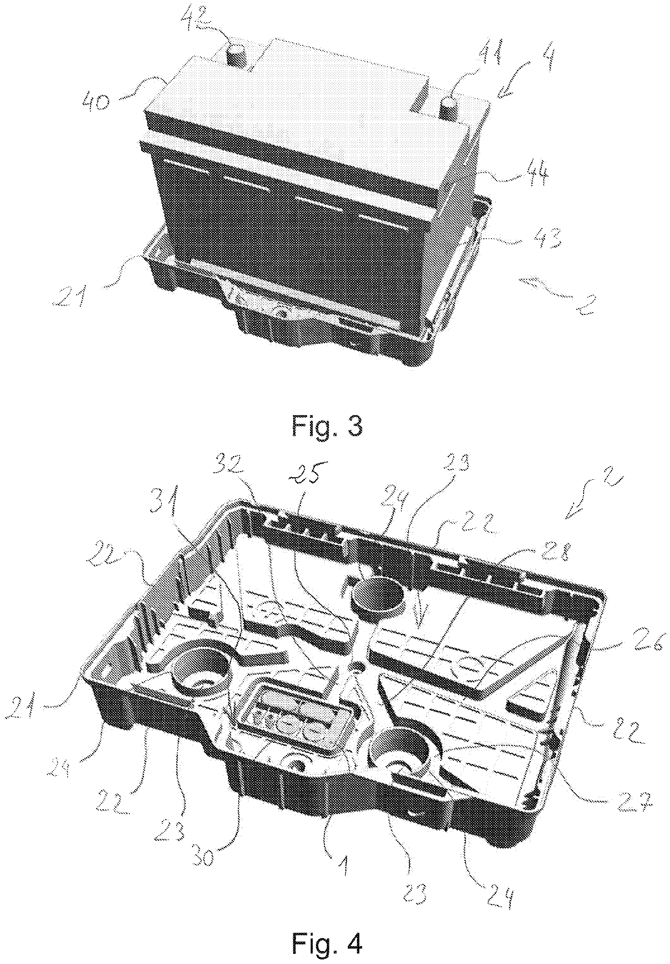

Cependant, selon une réalisation, telle qu'illustrée par exemple en figure 4, la forme de ce cadre permet en elle-même de fixer le support de bouchon 1 à un bac de batterie 21. Cette fixation est ici réalisée par insertion en force, ici par enfoncement, dans une forme saillante 30 complémentaire de la forme du cadre.

La figure 4 représente ainsi un ensemble d'accueil 2 d'une batterie comprenant un bac de batterie 21 et le support de bouchons 1 des figures 1 et 2.

Cet ensemble d'accueil 2 est destiné à être fixé dans le véhicule, en particulier dans son compartiment moteur. La batterie 4 est ensuite placée dans le bac 21, comme illustré en figure 3. Le fond de la batterie 4 est alors en vis-à-vis d'une face d'accueil 29, correspondant à la face supérieure du fond du bac 21.

Le bac 21 permet de récupérer toute éventuelle fuite d'électrolyte de la batterie 4.

Par exemple, un tuyau peut être fixé dans l'un des trous de dégazage formé dans le couvercle 40 de la batterie 4, notamment du côté de la borne positive 42 (ce trou de dégazage n'est donc pas visible en figure 3). Le tuyau débouche à son autre extrémité dans le bac 21, permettant ainsi de récupérer les fuites d'électrolyte.

L'autre trou de dégazage 44, du côté de la borne négative 41, est lui bouché par un bouchon pour éviter toute fuite non canalisée.

La forme saillante permettant la fixation du cadre du support 1 est ici un muret de protection 30 s'étendant en hauteur depuis la face d'accueil 29 vers le haut et se refermant sur lui-même. Ce muret de protection 30 forme ainsi également un logement permettant de protéger le support de bouchons 1 d'un écoulement d'électrolyte dans le bac 21.

Selon l'invention, comme ici, ce logement du support 1 peut être agencé de manière à ce qu'une fois la batterie 4 posée dans le bac 21, le corps 43 de la batterie recouvre la face d'accueil 29 et ferme le logement du support de bouchons 1, renforçant ainsi sa protection.

Le bac 21 est fixé dans le véhicule par des organes de fixation, par exemple des boulons, traversant des trous traversants 23 du fond du bac 21. Afin d'éviter que de l'électrolyte atteigne également ces organes de fixation, les trous traversants 23 peuvent également, comme ici, être protégés par des murets de protection 24, formant des puits de fixation 24, dont le trou traversant 23 correspond au fond du puit de fixation.

Le fond du bac 21 est traversé par un orifice d'évacuation 25 de liquide, notamment de l'électrolyte ou de l'eau de nettoyage du compartiment moteur, qui pourrait être entré dans le bac 21.

Des rigoles de collecte 27, 31 sont formées au pied des murets de protection 24, 30 des trous traversant 23 et du support de bouchons 1. Ces rigoles de collecte 27, 31 communiquent avec des rigoles d'évacuation 28, 32, qui débouchent au niveau de l'orifice d'évacuation 25. Cela permet ainsi d'évacuer plus rapidement de l'électrolyte présent dans le bac 21, tout en protégeant le support de bouchons 1 et les organes de fixation.

Le bac 21 peut comprendre également d'autres rigoles d'évacuation 26, non reliées à une rigole de collecte.

Les parois latérales 22 du bac de batterie permettent à la fois de caler la batterie 4 et de contenir l'électrolyte dans le bac 21, jusqu'à ce qu'il soit évacué.

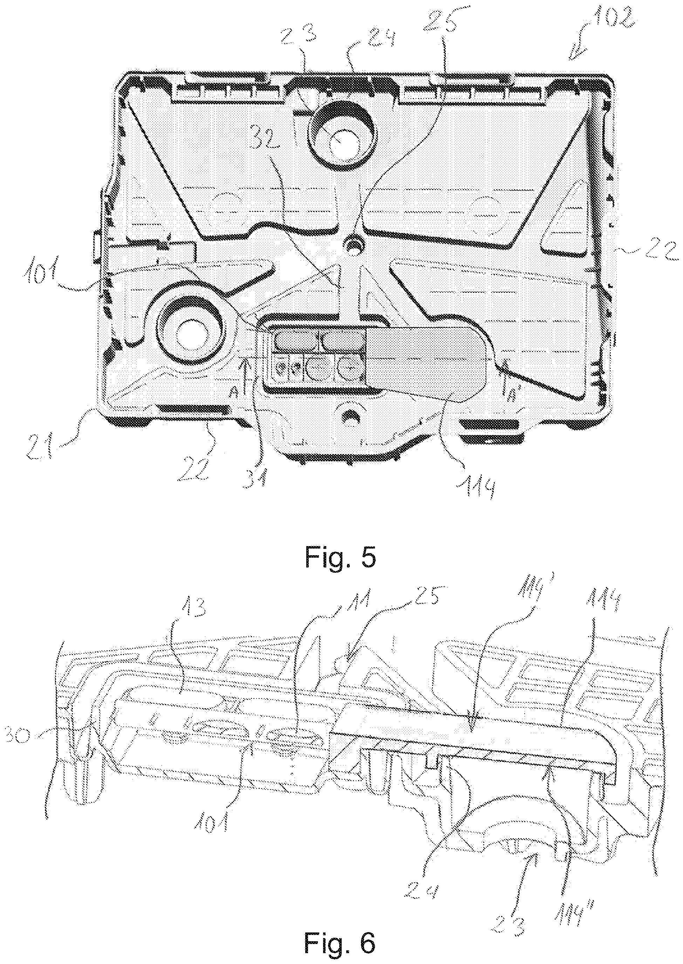

Les figures 5 et 6 illustrent une variante de l'ensemble d'accueil 102 illustré aux figures 3 et 4.

Dans cette variante, le bac de batterie 21 est identique et ne sera pas à nouveau décrit. Certaines références ont été reprises en figures 5 et 6 pour faciliter la comparaison, mais ne sont pas forcément à nouveau citées.

Cette variante diffère par son support de bouchons 101. Ce dernier diffère de celui des figures 1 et 2 par son bloc de rigidification, qui comprend ici un panneau latéral 114.

Ce panneau latéral 114 permet de recouvrir l'un des puits de fixation 24, protégeant ainsi d'avantage le trou traversant correspondant 23.

Comme on peut le voir en figure 6, le cadre est enfoncé avec une partie de son bloc de rigidification dans le muret de protection 30, permettant la fixation des bouchons 11, 13. Le bloc de rigidification est prolongé par le panneau latéral 114, dont une face inférieure, dite face couvrante 114'' recouvre l'un des puits de fixation 24.

Cette face couvrante 114'' comprend une nervure circulaire s'emmanchant sur le sommet du puit de fixation 24. On ferme ainsi efficacement l'accès au trou traversant 23.

Dans cet exemple, la face supérieure 114' du panneau latéral 114 comprend un marquage, non représenté. Ce marquage peut être réalisé lors du moulage du support de bouchons 101

Le panneau latéral 114 a ici une taille suffisamment grande pour que ce marquage forme une notice, notamment de montage des bouchons 11, 13 et/ou de la batterie 4.

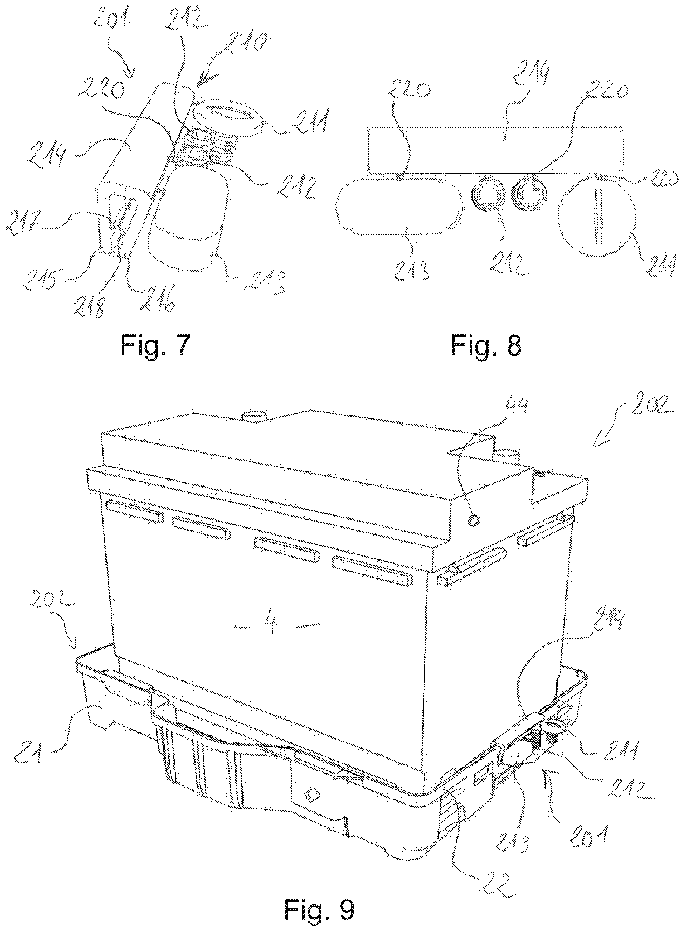

Les figures 7 et 8 illustrent un deuxième exemple de support de bouchon 201 selon l'invention.

Dans ce deuxième exemple, l'organe de solidarisation 210 comprend une pince 214 élastiquement déformable.

Le support 201 comprend ici quatre bouchons : un premier bouchon 211 identique au premier bouchon 11 du premier exemple, deux deuxièmes bouchons 212 identiques aux deuxièmes bouchons 12 du premier exemple, et un troisième bouchon 213 identique au troisième bouchon 13 du premier exemple.

Ici, chaque bouchon 211, 212, 213 est relié à la pince directement par une portion sécable 220. Les bouchons se détachent de la même manière que dans le premier exemple.

La pince 214 comprend deux branches 215, 216, se rapprochant l'une de l'autre. Ces branches sont aptes à s'écarter l'une de l'autre par déformation élastique de la pince. Cela permet d'enfoncer la pince 214 sur et autour d'une extrémité libre d'une paroi, par exemple comme illustré en figure 9, au sommet d'une paroi latérale 22 du bac 21, qui est ici identique à celui du premier exemple.

Pour améliorer le maintien du support de bouchons 201, chaque branche 215, 216 peut comprendre une lèvre 217, 218, ces lèvres étant en vis-à-vis et pouvant notamment se toucher lorsque le support 201 est enlevé du bac 21, comme en figure 7.

Le support de bouchons 201 et le bac 21 forme un deuxième exemple d'ensemble d'accueil 202.

Dans le premier exemple, et sa variante, le support de bouchons 1, 101, ne présente pas d'encombrement extérieur, et pourra s'adapter à davantage de véhicule.

Dans le deuxième exemple, le support de bouchons 201 reste accessible une fois la batterie 4 montée, et permet donc un bouchage du trou de dégazage 44 après montage.

## Revendications

1. Support de bouchons (1 ; 101 ; 201) de batterie de véhicule comprenant plusieurs bouchons (11, 12, 13 ; 211, 212, 213) de batterie et un organe de solidarisation (10 ; 210) reliant entre eux les bouchons de batterie dudit support, **caractérisé en ce que** chaque bouchon de batterie étant individuellement détachable dudit organe de solidarisation, ledit support formant un kit et lesdits bouchons étant des bouchons destinés à boucher un trou de dégazage (44).

2. Support de bouchons (1 ; 101 ; 201) selon la revendication 1, **caractérisé en ce que** les bouchons (11, 12, 13 ; 211, 212, 213) et l'organe de solidarisation (10 ; 210) sont venus de matière en une seule pièce.

3. Support de bouchons (1 ; 101 ; 201) selon la revendication 1 ou selon la revendication 2, **caractérisé en ce que** chaque bouchon (11, 12, 13 ; 211, 212, 213) est relié à l'organe de solidarisation (10 ; 210) via une portion sécable (20 ; 220) .

4. Support de bouchons (1 ; 101 ; 201) selon l'une des revendications précédentes, **caractérisé en ce qu'**au moins deux des bouchons (11, 12, 13 ; 211, 212, 213) sont de tailles et/ou de formes différentes.

5. Support de bouchons (1 ; 101 ; 201) selon l'une des revendications précédentes, **caractérisé en ce que** l'organe de solidarisation (10 ; 210) comprend une portion de fixation (14, 15, 16, 17 ; 214), destinée à fixer le support de bouchons.

6. Support de bouchons (1 ; 101 ; 201) selon la revendication 5, **caractérisé en ce que** la portion de fixation (14, 15, 16, 17 ; 214) a une forme agencée de manière à ce que cette portion de fixation soit apte à être insérée en force autour ou dans un élément saillant (30 ; 22) d'un bac de batterie (21).

7. Support de bouchons (1 ; 101) selon l'une des revendications précédentes, **caractérisé en ce que** l'organe de solidarisation (10) comprend un cadre (14, 15, 16, 17), à l'intérieur duquel sont agencés lesdits bouchons (11, 12, 13), ces bouchons étant reliés au cadre par des portions de jonction (18, 19, 20).

8. Support de bouchons (201) selon l'une des revendications 1 à 6, **caractérisé en ce que** l'organe de solidarisation comprend une pince (214) élastiquement déformable.

9. Support de bouchons (101) selon l'une des revendications précédentes, **caractérisé en ce que** l'organe de solidarisation (10) comprend un panneau latéral (114) comprenant une face supérieure (114') et une face inférieure (114''), la face supérieure du panneau latéral comprenant un marquage.

10. Ensemble d'accueil (2 ; 102 ; 202) de batterie comprenant un bac de batterie (21) et un support de bouchons (1 ; 101 ; 201) selon l'une des revendications précédentes, ledit support étant fixé au bac de batterie.

11. Ensemble d'accueil (2; 102) selon la revendication 10, **caractérisé en ce que** le bac (21) comprend un fond avec une face supérieure, dite face d'accueil (29), destinée à être en vis-à-vis d'une batterie (4) destinée à se loger dans le bac, la face d'accueil comprenant un muret de protection (30) du support de bouchons (1 ; 101) s'étendant en hauteur depuis la face d'accueil vers le haut et se refermant sur lui-même de manière à former un logement à l'intérieur duquel est logé le support de bouchons.

12. Ensemble d'accueil (102) selon l'une des revendications 10 à 11, **caractérisé en ce que** le bac (21) comprend un fond avec une face supérieure, dite face d'accueil (29), destinée à être en vis-à-vis d'une batterie (4) destinée à se loger dans le bac, le fond comprenant des trous traversants (23) destinés à être traversés par des organes de fixation du bac à un véhicule, lesdits trous traversants étant entourés par un muret de protection (24) refermé sur lui-même, formant ainsi un puit de fixation, ledit puit de fixation étant saillant depuis la face d'accueil, le support comprenant un panneau latéral (114) comprenant une face supérieure (114') et une face inférieure (114''), cette face inférieure recouvrant l'un des puits de fixation.

13. Véhicule comprenant :
- un support de bouchons selon l'une des revendications 1 à 9, et/ou
- un ensemble d'accueil selon l'une des revendications 10 à 12.

## Patentansprüche

1. Träger (1; 101; 201) für Stopfen einer Fahrzeugbatterie, welcher mehrere Batteriestopfen (11, 12, 13; 211, 212, 213) und ein Mittel zur festen Verbindung (10; 210), das die Batteriestopfen des Trägers miteinander verbindet, umfasst,
**dadurch gekennzeichnet, dass** jeder Batteriestopfen einzeln von dem Mittel zur festen Verbindung lösbar ist, wobei der Träger einen Bausatz bildet und die Stopfen Stopfen sind, die dazu bestimmt sind, ein Entgasungsloch (44) zu verschließen.

2. Träger (1; 101; 201) für Stopfen nach Anspruch 1, **dadurch gekennzeichnet, dass** die Stopfen (11, 12, 13; 211, 212, 213) und das Mittel zur festen Verbindung (10; 210) materialeinheitlich einstückig ausgebildet sind.

3. Träger (1; 101; 201) für Stopfen nach Anspruch 1 oder nach Anspruch 2, **dadurch gekennzeichnet, dass** jeder Stopfen (11, 12, 13; 211, 212, 213) mit dem Mittel zur festen Verbindung (10; 210) über einen trennbaren Abschnitt (20; 220) verbunden ist.

4. Träger (1; 101; 201) für Stopfen nach einem der vorhergehenden Ansprüche, **dadurch gekennzeichnet, dass** wenigstens zwei der Stopfen (11, 12, 13; 211, 212, 213) unterschiedliche Größen und/oder Formen haben.

5. Träger (1; 101; 201) für Stopfen nach einem der vorhergehenden Ansprüche, **dadurch gekennzeichnet, dass** das Mittel zur festen Verbindung (10; 210) einen Befestigungsabschnitt (14, 15, 16, 17; 214) umfasst, der dazu bestimmt ist, den Träger für Stopfen zu befestigen.

6. Träger (1; 101; 201) für Stopfen nach Anspruch 5, **dadurch gekennzeichnet, dass** der Befestigungsabschnitt (14, 15, 16, 17; 214) eine Form aufweist, die so gestaltet ist, dass dieser Befestigungsabschnitt geeignet ist, auf oder in ein vorstehendes Element (30; 22) einer Batteriewanne (21) auf- bzw. eingepresst zu werden.

7. Träger (1; 101) für Stopfen nach einem der vorhergehenden Ansprüche, **dadurch gekennzeichnet, dass** das Mittel zur festen Verbindung (10) einen Rahmen (14, 15, 16, 17) umfasst, in dessen Innerem die Stopfen (11, 12, 13) angeordnet sind, wobei diese Stopfen durch Verbindungsabschnitte (18, 19, 20) mit dem Rahmen verbunden sind.

8. Träger (201) für Stopfen nach einem der Ansprüche 1 bis 6, **dadurch gekennzeichnet, dass** das Mittel zur festen Verbindung eine elastisch verformbare Klammer (214) umfasst.

9. Träger (101) für Stopfen nach einem der vorhergehenden Ansprüche, **dadurch gekennzeichnet, dass** das Mittel zur festen Verbindung (10) eine seitliche Platte (114) umfasst, die eine Oberseite (114') und eine Unterseite (114") umfasst, wobei die Oberseite der seitlichen Platte eine Markierung umfasst.

10. Aufnahmeanordnung (2; 102; 202) für eine Batterie, welche eine Batteriewanne (21) und einen Träger (1; 101; 201) für Stopfen nach einem der vorhergehenden Ansprüche umfasst, wobei der Träger an der Batteriewanne befestigt ist.

11. Aufnahmeanordnung (2; 102) nach Anspruch 10, **dadurch gekennzeichnet, dass** die Wanne (21) einen Boden mit einer Oberseite, Aufnahmeseite (29) genannt, umfasst, die dazu bestimmt ist, sich gegenüber einer Batterie (4) zu befinden, die in der Wanne aufgenommen werden soll, wobei die Aufnahmeseite eine Wandung (30) zum Schutz des Trägers (1; 101) für Stopfen umfasst, die sich in der Höhe von der Aufnahmeseite aus nach oben erstreckt und in sich geschlossen ist, um eine Aufnahme zu bilden, in deren Innerem der Träger für Stopfen aufgenommen ist.

12. Aufnahmeanordnung (102) nach einem der Ansprüche 10 bis 11, **dadurch gekennzeichnet, dass** die Wanne (21) einen Boden mit einer Oberseite, Aufnahmeseite (29) genannt, umfasst, die dazu bestimmt ist, sich gegenüber einer Batterie (4) zu befinden, die in der Wanne aufgenommen werden soll, wobei der Boden Durchgangslöcher (23) umfasst, die dazu bestimmt sind, von Mitteln zur Befestigung der Wanne an einem Fahrzeug durchquert zu werden, wobei die Durchgangslöcher von einer in sich geschlossenen Schutzwandung (24) umgeben sind, die somit einen Befestigungsschacht bildet, wobei der Befestigungsschacht von der Aufnahmeseite aus vorsteht, wobei der Träger eine seitliche Platte (114) umfasst, die eine Oberseite (114') und eine Unterseite (114") umfasst, wobei diese Unterseite einen der Befestigungsschächte bedeckt.

13. Fahrzeug, welches umfasst:
- einen Träger für Stopfen nach einem der Ansprüche 1 bis 9, und/oder
- eine Aufnahmeanordnung nach einem der Ansprüche 10 bis 12.

## Claims

1. Support (1; 101; 201) for vehicle battery caps, comprising multiple battery caps (11, 12, 13; 211, 212, 213) and a securing member (10; 210) connecting the battery caps of said support to one another, **characterized in that** each battery cap is individually detachable from said securing member, said support forming a kit and said caps being caps intended for closing off a degassing hole (44).

2. Cap support (1; 101; 201) according to Claim 1, **characterized in that** the caps (11, 12, 13; 211, 212, 213) and the securing member (10; 210) are made in one piece.

3. Cap support (1; 101; 201) according to Claim 1 or according to Claim 2, **characterized in that** each cap (11, 12, 13; 211, 212, 213) is connected to the securing member (10; 210) via a breakable portion (20; 220).

4. Cap support (1; 101; 201) according to one of the preceding claims, **characterized in that** at least two of the caps (11, 12, 13; 211, 212, 213) have different sizes and/or shapes.

5. Cap support (1; 101; 201) according to one of the preceding claims, **characterized in that** the securing member (10; 210) comprises a fixing portion (14, 15, 16, 17; 214) intended to fix the cap support.

6. Cap support (1; 101; 201) according to Claim 5, **characterized in that** the fixing portion (14, 15, 16, 17; 214) has a shape arranged in such a way that this fixing portion is able to be inserted by force around or into a protruding element (30; 22) of a battery tray (21).

7. Cap support (1; 101) according to one of the preceding claims, **characterized in that** the securing member (10) comprises a frame (14, 15, 16, 17), inside which said caps (11, 12, 13) are arranged, these caps being connected to the frame by way of joining portions (18, 19, 20).

8. Cap support (201) according to one of Claims 1 to 6, **characterized in that** the securing member comprises an elastically deformable clamp (214).

9. Cap support (101) according to one of the preceding claims, **characterized in that** the securing member (10) comprises a lateral panel (114) comprising an upper face (114') and a lower face (114"), the upper face of the lateral panel comprising a marking.

10. Battery receiving assembly (2; 102; 202) comprising a battery tray (21) and a cap support (1; 101; 201) according to one of the preceding claims, said support being fixed to the battery tray.

11. Receiving assembly (2; 102) according to Claim 10, **characterized in that** the tray (21) comprises a base with an upper face, referred to as the receiving face (29), intended to face a battery (4) that is intended to be housed in the tray, the receiving face comprising a low wall (30) for protecting the cap support (1; 101), the height of which extends from the receiving face upwards and which closes in on itself in such a way as to form a housing inside which the cap support is housed.

12. Receiving assembly (102) according to either one of Claims 10 and 11, **characterized in that** the tray (21) comprises a base with an upper face, referred to as a receiving face (29), intended to face a battery (4) that is intended to be housed in the tray, the base comprising through-holes (23) through which are intended to pass members for fixing the tray to a vehicle, said through-holes being surrounded by a low protective wall (24) closed in on itself, thus forming a fixing well, said fixing well protruding from the receiving face, the support comprising a lateral panel (114) comprising an upper face (114') and a lower face (114''), this lower face covering one of the fixing wells.

13. Vehicle comprising:
- a cap support according to one of Claims 1 to 9, and/or
- a receiving assembly according to one of Claims 10 to 12.
